# EUROPÄISCHE PATENTSCHRIFT

(11) **EP 3 812 713 B1**
(45) Veröffentlichungstag und Bekanntmachung des Hinweises auf die Patenterteilung: **22.03.2023**
(21) Anmeldenummer: 20199503.2
(22) Anmeldetag: 01.10.2020
(51) Int. Cl.: G01F 1/66, G01F 25/10

(54) **MESSEINRICHTUNG UND VERFAHREN ZUM BETRIEB EINER MESSEINRICHTUNG, DIE ZUR ERMITTLUNG EINER FLUIDGRÖSSE DIENT**
MEASURING DEVICE AND METHOD FOR OPERATING A MEASURING DEVICE WHICH SERVES TO DETERMINE A FLUID VOLUME
DISPOSITIF DE MESURE ET PROCÉDÉ DE FONCTIONNEMENT D'UN DISPOSITIF DE MESURE SERVANT À DÉTERMINER UNE GRANDEUR DE FLUIDE

(30) Priorität: 23.10.2019 DE 102019007359
(43) Veröffentlichungstag der Anmeldung: 28.04.2021
(73) Patentinhaber: Diehl Metering GmbH, 91522 Ansbach (DE)
(72) Erfinder: Mayle, Michael, 91522 Ansbach (DE); Madinger, Andreas, 91522 Ansbach (DE); Hofmann, Alexander, 91623 Sachsen (DE); Schmidt, Markus, 91580 Petersaurach (DE)
(74) Vertreter: Diehl Patentabteilung

(56) Entgegenhaltungen:
- WO-A1-2009/071960
- DE-A1-102009 046 561
- US-A1- 2017 167 904

## Beschreibung

Die Erfindung betrifft ein Verfahren zum Betrieb einer Messeinrichtung, die zur Ermittlung einer ein Fluid und/oder eine Fluidströmung des Fluids betreffenden Fluidgröße dient und die einen das Fluid aufnehmenden und/oder von dem Fluid durchströmten Messbehälter und einen an dem Messbehälter angeordneten Schwingungswandler umfasst. Daneben betrifft die Erfindung eine Messeinrichtung zur Ermittlung einer ein Fluid und/oder eine Fluidströmung des Fluids betreffenden Fluidgröße.

Eine Möglichkeit, einen Durchfluss oder andere ein Fluid betreffende Messgrößen zu erfassen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflektionen an Wänden oder speziellen Reflektionselementen zu einem zweiten Ultraschallwandler geführt wird. Aus einer Laufzeitdifferenz zwischen den Laufzeiten der Ultraschallwelle zwischen den Ultraschallwandlern bei einer Vertauschung von Sender und Empfänger kann eine Durchflussgeschwindigkeit durch das Messrohr bestimmt werden. Für andere Messaufgaben, beispielsweise für eine Erkennung des Fluids anhand einer Schallgeschwindigkeit im Fluid, kann es auch ausreichend sein, nur einen Ultraschallwandler zu nutzen, zu dem die Welle zurückgeführt wird.

Um eine solche Messeinrichtung problemlos in einen Fluidkreislauf integrieren zu können, ist es vorteilhaft, wenn diese kleinbauend ausgeführt ist und einen geringen Energieverbrauch ausführt, wodurch beispielsweise ein Batteriebetrieb über längere Zeiträume ermöglicht werden kann. Wird hierbei ein Signal mit einer bestimmten Frequenz zur Anregung der Ultraschallwelle genutzt, hängt die Amplitude des empfangenen Signals bei gegebener Dimensionierung der Schwingungswandler und gegebener Anregungsleistung typischerweise von dieser Frequenz ab, wobei bei bestimmten Resonanzfrequenzen des Systems besonders große Signalamplituden des Empfangssignals erreicht werden können. Um eine hohe Signalqualität und somit auch eine hohe Messgenauigkeit zu erreichen, kann es somit vorteilhaft sein, den bzw. die Schwingungswandler an oder zumindest nahe der Resonanzfrequenz des Messsystems zu betreiben. Aufgrund von Bauteiltoleranzen können sich entsprechende Resonanzfrequenzen und insbesondere auch deren Verhalten bei Veränderung der Messparameter, beispielsweise bei einer Temperaturänderung, zwischen prinzipiell baugleichen Messeinrichtungen unterscheiden bzw. sie können sich im Rahmen der Alterung der Messeinrichtung verändern.

Um einen Betriebsfrequenz-Arbeitspunkt automatisch einzustellen, schlägt die Druckschrift EP 27 25 353 B1 vor, eine Ansteuerfrequenz eines Ultraschallsensors in Intervallen zu verändern und jeweils die Stärke des von dem Ultraschallempfänger empfangenen Signals zu ermitteln. Die Ansteuerfrequenz wird solange verändert, bis die Empfangssignalstärke ein Maximum erreicht hat. Da somit relativ viele Messvorgänge durchgeführt werden müssen, bis der Arbeitspunkt ermittelt werden kann, ist die Einstellung des Arbeitspunktes relativ energieintensiv und es ist in diesem Zeitintervall keine oder zumindest keine optimale Durchflussmessung möglich.

Die DE 10 2009 046561 A1 offenbart ein Verfahren zum Betrieb einer gattungsgemäßen Messeinrichtung, bei dem eine Korrektur der Anregungsfrequenz eines Schwingungswandlers gemäß einer Auswertung des Ausgangssignals des Schwingungswandlers erfolgt.

Der Erfindung liegt somit die Aufgabe zugrunde, ein Verfahren zum Betrieb einer Messeinrichtung anzugeben, bei dem ein im Rahmen der Messung genutztes Anregungssignal, insbesondere dessen Frequenz, mit geringem Energie- und/oder Zeitaufwand ermittelt werden kann bzw. eine Änderung von Resonanzfrequenzen leicht erkannt werden kann. Die Aufgabe wird erfindungsgemäß durch ein Verfahren der eingangs genannten Art gelöst, nämlich durch das Verfahren nach Anspruch 1, vobei durch eine Steuereinrichtung der Messeinrichtung der Schwingungswandler zur Anregung einer Welle in dem Fluid mit einem Testanregungssignal angesteuert wird, wobei die Welle entlang eines Ausbreitungspfades zurück zu dem Schwingungswandler oder zu wenigstens einem an dem Messbehälter angeordneten weiteren Schwingungswandler der Messeinrichtung geführt wird, wodurch der oder der weitere Schwingungswandler zu einer Schwingung angeregt wird, wobei durch die Steuereinrichtung ein diese Schwingung betreffendes Ausgangssignal erfasst und eine Frequenz jenes Abschnitts des Ausgangssignals ermittelt wird, der in einem Auswerteintervall liegt, wobei das Auswerteintervall beginnt, nachdem die Ansteuerung des Schwingungswandlers zur Anregung der Welle abgeschlossen ist und/oder nachdem ein Maximum der Amplitude der Schwingung erreicht oder überschritten ist, wobei die Ermittlung der Fluidgröße mit einem Messanregungssignal in Abhängigkeit der ermittelten Frequenz erfolgt, und/oder wobei bei Erfüllung einer Auslösebedingung, deren Erfüllung von der ermittelten Frequenz abhängt, eine Fehlermeldung oder ein Hinweis an einen Benutzer und/oder eine messeinrichtungsexterne Einrichtung ausgegeben wird und/oder die Messeinrichtung in einen Fehlerzustand versetzt wird, in dem insbesondere keine Ermittlung der Fluidgröße erfolgt.

Würde die Welle mit einem sehr breitbandigen Anregungssignal angeregt, so würde eine Schwingung des empfangenden Schwingungswandlers angeregt, deren dominante Frequenz der Resonanzfrequenz des Systems entspricht. Eine solche dominante Frequenz könnte beispielsweise als Maximum eines Leistungsdichtespektrums oder auch mithilfe eines Frequenzzählers ermittelt werden. Um eine robuste Übertragung der Schwingung von dem Schwingungswandler zum weiteren Schwingungswandler bzw. entlang des Ausbreitungspfades zurück zum gleichen Schwingungswandler zu erreichen, sollte zur Anregung jedoch ein relativ schmalbandiges Anregungssignal genutzt werden, beispielsweise ein periodisches Signal, das die dominante Frequenz der Anregung vorgibt und das durch eine einhüllende Amplitude moduliert ist. Dies führt jedoch dazu, dass eine entsprechende Spektralverteilung des Anregungssignals auf das Ausgangssignal aufgeprägt wird, so dass bei Auswertung des gesamten Ausgangssignals typischerweise die dominante Frequenz des Anregungssignals oder eine zwischen dieser Frequenz und der tatsächlichen Resonanzfrequenz liegende Zwischenfrequenz als scheinbare Resonanzfrequenz ermittelt wird.

Im Rahmen der Erfindung wurde erkannt, dass dieses Problem vermieden bzw. deutlich verringert werden kann, wenn ausschließlich ein Auswerteintervall betrachtet wird, das beginnt, nachdem die Ansteuerung des Schwingungswandlers zur Anregung der Welle angeschlossen ist bzw. nachdem ein Maximum der Amplitude der Schwingung erreicht oder überschritten ist. Dies resultiert daraus, dass während der Anregung der Schwingung durch die Ansteuerung des Schwingungswandlers bzw. durch eine einlaufende Welle, also vor den genannten Zeitpunkten, eine erzwungene Schwingung des oder des weiteren Schwingungswandlers erfolgt, deren Frequenz durch die Frequenz der externen Anregung vorgegeben ist. Nach Ende der Ansteuerung des Schwingungswandlers zur Anregung der Welle, insbesondere wenn zusätzlich noch eine erwartete Laufzeit der Welle zurück zum Schwingungswandler bzw. zum weiteren Schwingungswandler abgewartet wird, bzw. nach Erreichen des Maximums der Amplitude der Schwingung kann hingegen davon ausgegangen werden, dass zumindest für den Großteil des Auswerteintervalls der bzw. der weitere Schwingungswandler frei schwingt, womit das Spektrum der Schwingung durch die Resonanzfrequenz des Systems bzw. des oder des weiteren Schwingungswandlers dominiert ist. Durch eine ausschließliche Betrachtung des Ausgangssignals innerhalb des Auswerteintervalls kann somit ein Einfluss des Spektrums des Testanregungssignals auf das ermittelte Spektrum des Ausgangssignals zumindest weitgehend eliminiert werden, womit eine Frequenz des Ausgangssignals im Auswerteintervall, insbesondere eine Resonanzfrequenz des Systems bzw. des oder des weiteren Schwingungswandlers, mit guter Genauigkeit mit einer einzigen Messung ermittelt werden kann. Hierdurch kann insbesondere eine Anregungsfrequenz auf eine ermittelte Resonanzfrequenz des Systems bzw. insbesondere der Schwingungswandler abgestimmt werden.

Die ermittelte Frequenz kann insbesondere die dominante Frequenz des Ausgangssignals in dem Auswerteintervall sein. Verschiedene Möglichkeiten zur Ermittlung einer solchen dominanten Frequenz werden später noch detailliert erläutert. Im Rahmen des erfindungsgemäßen Verfahrens wird insbesondere eine Anregungsfrequenz des Messanregungssignals in Abhängigkeit der ermittelten Frequenz vorgegeben. Die Anregungsfrequenz kann hierbei identisch zur ermittelten Frequenz sein, durch einen festen Offset von dieser beabstandet sein, mithilfe einer Lookup-Tabelle ermittelt werden oder Ähnliches. Die Frequenz kann insbesondere die Frequenz eines periodischen Signals, beispielsweise einer Sinusoder Rechteckschwingung, sein. Das periodische Signal kann durch eine einhüllende, beispielsweise eine Rechteckfunktion mit vorgegebener Länge, ein Cosinusquadrat- oder Blackman-Harris-Fenster oder Ähnliches Amplituden moduliert werden.

Bevorzugt wird die ermittelte Frequenz, wie später noch genauer erläutert wird, genutzt, um ein Anregungssignal für den bzw. die Schwingungswandler vorzugeben, das bei der Ermittlung der Fluidgröße genutzt wird. Ergänzend oder alternativ kann bei der Ermittlung der Fluidgröße, insbesondere bei einer Verarbeitung von Messdaten, ein Parameter bzw. Korrekturfaktor berücksichtigt werden, der von der ermittelten Frequenz abhängt. Beispielsweise kann ein solcher Parameter oder Korrekturfaktor anhand einer z.B. empirisch ermittelten Look-up-Tabelle vorgegeben werden. Ein Korrekturfaktor kann z.B. dazu dienen, Einflüsse einer Alterung der Messeinrichtung oder von Umgebungsbedingungen, beispielsweise einer Temperatur, zu kompensieren, die sich auch auf die Resonanzfrequenzen bzw. dominanten Frequenzen im System auswirken.

Ergänzend oder alternativ zur Ermittlung der Fluidgröße in Abhängigkeit der ermittelten Frequenz kann in Abhängigkeit der ermittelten Frequenz unter bestimmten Bedingungen eine Hinweisgabe bzw. eine Ausgabe einer Fehlermeldung erfolgen. Die Auslösebedingung für die Hinweisgabe bzw. die Fehlermeldung kann beispielsweise erfüllt sein, wenn die ermittelte Frequenz außerhalb eines Sollbereichs liegt bzw. eine Abweichung von einem Sollwert größer als ein Grenzwert ist. Beispielsweise kann sich die Resonanzfrequenz der Messeinrichtung, die als die ermittelte Frequenz ermittelt werden kann, aufgrund einer Alterung oder einer Beschädigung des oder des weiteren Schwingungswandlers ändern. Geringfügige Änderungen der Resonanzfrequenz können durch Anpassung des Messanregungssignals ausgeglichen werden. Treten jedoch zu starke Abweichungen auf bzw. weist die Stärke der Abweichung darauf hin, dass die Messgenauigkeit, beispielsweise aufgrund einer Alterung oder Beschädigung der Messeinrichtung leiden könnte, so kann ein Benutzer hierauf hingewiesen werden bzw. insbesondere drahtlos ein entsprechender Hinweis bzw. eine entsprechende Fehlermeldung an eine messeinrichtungsexterne Einrichtung gegeben werden, beispielsweise um eine Wartung der Messeinrichtung oder einen Wechsel bestimmter Komponenten vorzuschlagen. Eine Hinweisgabe kann durch eine an der Messeinrichtung angebrachte Hinweiseinrichtung, beispielsweise ein Lautsprecher, ein Display oder Ähnliches erfolgen. Es ist jedoch beispielsweise auch möglich, zur Hinweisgabe ein entsprechendes Signal über eine drahtlose Funkverbindung, beispielsweise an eine Zentraleinrichtung bzw. ein Überwachungssystem eines Versorgers oder des Herstellers der Messeinrichtung oder ein Mobiltelefon des Benutzers, zu senden. Ergänzend oder alternativ kann die Messeinrichtung bei Erfüllung der Auslösebedingung in einen Fehlerzustand geschaltet werden. Es ist möglich, dass in dem Fehlerzustand keine Messwerterfassung erfolgt oder dass in dem Fehlerzustand erfasste Messdaten als fehlerhaft markiert werden. Hierdurch kann vermieden werden, dass verfälschte Messdaten bzw. Messdaten, deren Genauigkeit nicht gewährt werden kann, erfasst werden, wenn die ermittelte Frequenz auf eine deutliche Veränderung der Eigenschaften der Messeinrichtung hindeutet.

Wird die obig erläuterte Ermittlung der Frequenz zu mehreren beabstandeten Zeitpunkten wiederholt, kann es auch vorteilhaft sein, den Verlauf der ermittelten Frequenz zu speichern bzw. zu Diagnosezwecken auszuwerten. Beispielsweise können charakteristische Frequenzänderungen gegen Ende des Lebenszyklus von Schwingungswandlern erkannt werden oder es kann erkannt werden, dass eine sprunghafte Frequenzänderung vorliegt, die beispielsweise auf eine Beschädigung eines Schwingungswandlers hinweisen kann, beispielsweise auf einen Riss oder Ähnliches.

Bei den folgenden Erläuterungen und Beispielen liegt der Schwerpunkt auf Messeinrichtungen, deren Schwingungswandler dazu dienen, Wellen unmittelbar in das Fluid einzukoppeln bzw. von dort zu empfangen. Die erfindungsgemäße Lehre ist jedoch ebenfalls auf Messeinrichtungen anwendbar, bei denen eine Ein- bzw. Auskopplung der Welle in das Fluid indirekt über eine Wand des Messbehälters, beispielsweise eine Rohrwand, erfolgt. Beispielsweise können der Schwingungswandler bzw. der weitere Schwingungswandler dazu eingerichtet sein, zunächst eine geführte Welle in einer Wand des Messbehälters anzuregen, die wiederum die Welle in das Fluid einkoppelt. Als geführte Welle kann beispielsweise eine Lamb-Welle in die Wand des Messbehälters eingekoppelt werden.

Die Ermittlung der Fluidgröße hängt vorzugsweise zumindest insoweit von der ermittelten Frequenz ab, dass ein Messanregungssignal, das die Steuereinrichtung im Rahmen der Ermittlung der Fluidgröße an den oder den weiteren Schwingungswandler ausgibt, in Abhängigkeit der ermittelten Frequenz vorgegeben wird. Insbesondere kann eine Anregungsfrequenz des Messanregungssignals in Abhängigkeit der ermittelten Frequenz vorgegeben werden und beispielsweise auf diese Frequenz gesetzt werden. Hierdurch kann z.B. erreicht werden, dass die Anregung mit einer Resonanzfrequenz des bzw. der Schwingungswandler erfolgt. Dies ermöglicht es mit einem relativ kleinen Energieeintrag ausreichende Signalamplituden zu erreichen, womit ein niedriger Energieverbrauch der Messeinrichtung erreicht wird.

Die Steuereinrichtung kann in Abhängigkeit des Ausgangssignals digitale Messdaten ermitteln, die den zeitlichen Verlauf des Ausgangssignals beschreiben, wobei die Frequenz und/oder der Zeitpunkt, zu dem das Maximum der Amplitude der Schwingung erreicht wird, in Abhängigkeit der digitalen Messdaten ermittelt werden. Hierbei kann das Ausgangssignal vorzugsweise durch einen Analog-Digital-Wandler gewandelt werden, dessen Wandelrate größer, beispielsweise wenigstens um den Faktor 3 oder 5 oder 10 größer, als eine dominante Frequenz des Testanregungssignals bzw. des Messanregungssignals bzw. als die ermittelte Frequenz bzw. als eine zu ermittelnde Resonanzfrequenz ist. Eine digitale Weiterverarbeitung der Messdaten ermöglicht es beispielsweise besonders einfach, eine Einhüllende des Ausgangssignals und somit das Maximum der Amplitude zu ermitteln. Zudem kann mit geringem Aufwand, beispielsweise durch eine Fourier-Transformation, insbesondere eine Fast-Fourier-Transformation, ein Leistungsdichtespektrum für das Auswerteintervall oder für Teilintervalle des Auswerteintervalls bestimmt werden, wodurch eine Ermittlung der dominanten Frequenz als Maximum des Leistungsdichtespektrums leicht möglich ist. Die Erfassung der digitalen Messdaten kann beispielsweise mit dem Ende der Anregung der Welle beginnen oder demgegenüber um ein vorgegebenes Zeitintervall versetzt sein.

Die Frequenz kann ermittelt werden, indem ein Maximum des Leistungsdichtespektrums des Ausgangssignals im Auswerteintervall ermittelt wird oder indem Zeitabstände zwischen Überschreitungen und/oder Unterschreitungen eines vorgegebenen Grenzwertes durch das Ausgangssignal innerhalb des Auswerteintervalls ausgewertet werden. Die Auswertung kann wie obig erläutert auf den digitalen Messdaten erfolgen. Ein Leistungsdichtespektrum kann in diesem Fall durch eine Fourier-Transformation generiert werden. Auch Abstände zwischen Nulldurchgänge oder anderen Grenzwertüber- bzw. -unterschreitungen können in digitalen Messdaten leicht ermittelt werden. Es ist jedoch auch möglich, die Zeitabstände zwischen Über- bzw. Unterschreitungen eines vorgegebenen Grenzwertes, insbesondere Zeitabstände zwischen Nulldurchgängen, ohne eine vorangehende Analog-Digital-Wandlung zu ermitteln, beispielsweise mithilfe eines Frequenzzählers, einer Periodenmessung oder allgemein einem sogenannten Time-to-Digital-Converter.

Durch die Steuereinrichtung kann eine Einhüllende oder eine momentane Signalamplitude des Ausgangssignals ermittelt werden, wobei der Beginn und/oder das Ende des Auswerteintervalls von der Einhüllenden oder der momentanen Signalamplitude abhängen. Als momentane Signalamplitude kann insbesondere jeweils das Maximum bzw. Minimum des Ausgangssignals bzw. der digitalen Messdaten zwischen zwei Grenzwertüber- bzw. -unterschreitungen, also insbesondre zwischen zwei Nulldurchgängen, ermittelt werden. Eine Einhüllende kann beispielsweise ermittelt werden, indem das quadrierte oder auf andere Weise gleichgerichtete Ausgangssignal bzw. die entsprechend verarbeiteten digitalen Messdaten tiefpassgefiltert wird.

Das Auswerteintervall kann insbesondere mit dem Maximum der Amplitude der Schwingung bzw. zu einem definierten Zeitpunkt nach diesem Maximum beginnen, wobei das Maximum anhand der einhüllenden bzw. der momentanen Signalamplitude ermittelt werden kann. Das Ende des Auswerteintervalls kann so gewählt werden, dass die momentane Signalamplitude bzw. die Einhüllende zum Ende des Auswerteintervalls unter einen vorgegebenen Grenzwert fällt. Durch die beschriebene Wahl des Beginns des Auswerteintervalls kann, wie bereits erläutert, erreicht werden, dass das Spektrum des Testanregungssignals die ermittelte Frequenz nicht oder nur geringfügig beeinflusst. Die beschriebene Wahl des Endes des Auswerteintervalls kann vorteilhaft sein, um Zeitabschnitte, in denen das Ausgangssignal bzw. in denen die digitalen Messdaten durch Rauschen dominiert sind, nicht bei der Frequenzermittlung zu berücksichtigen.

Dadurch, dass im erfindungsgemäßen Verfahren zur Frequenzermittlung nicht das gesamte Ausgangssignal sondern nur das Auswerteintervall berücksichtigt wird, kann wie erläutert ein Einfluss des Spektrums des Testanregungssignals auf die ermittelte Frequenz bereits weitgehend reduziert werden. Dennoch kann es für die Genauigkeit der Frequenzermittlung nachteilig sein, wenn eine dominante Frequenz des Testanregungssignals sehr nahe an der zu ermittelnde Frequenz liegt. Zudem sollte vermieden werden, dass die zu ermittelnde Frequenz in einem Minimum des Leistungsdichtespektrums des Testanregungssignals liegt, da hierdurch die Erkennung der Resonanzfrequenz erschwert werden kann.

Daher wird in dem erfindungsgemäßen Verfahren eine Messeinrichtung verwendet, bei der die Amplitude des Ausgangssignals bei einer gegebenen Amplitude des Testanregungssignals für wenigstens eine Resonanzfrequenz ein lokales Maximum aufweist, wobei das Testanregungssignal ein durch eine Einhüllende amplitudenmoduliertes periodisches Signal ist, wobei sich einerseits die Resonanzfrequenz und die Anregungsfrequenz des periodischen Signals um wenigstens 1 % oder wenigstens 3 % der Resonanzfrequenz unterscheiden und/oder wobei andererseits die Anregungsfrequenz und die Einhüllende so gewählt sind, dass die Minima des Leistungsdichtespektrums des Testanregungssignals um wenigstens 1 % oder wenigstens 3 % der Resonanzfrequenz von dieser beabstandet sind. Vorzugsweise können sich die Resonanzfrequenz und die Anregungsfrequenz des periodischen Signals um 5 % der Resonanzfrequenz oder mehr unterscheiden und/oder die Minima des Leistungsdichtespektrums des Testanregungssignals können um 5 % oder mehr der Resonanzfrequenz von dieser beabstandet sein.

Wird eine Messeinrichtung verwendet, bei der die Amplitude des Ausgangssignals für wenigstens eine weitere Resonanzfrequenz oder dominante Frequenz ein lokales Maximum aufweisen würde, wenn ein weißes Rauschen als Anregungssignal verwendet würde, wobei das Testanregungssignal ein durch eine Einhüllende amplitudenmoduliertes periodisches Signal ist, kann es vorteilhaft sein, die Einhüllende derart zu wählen, dass das Frequenzspektrum des Testanregungssignals bei der weiteren Resonanzfrequenz oder der dominanten Frequenz ein lokales Minimum aufweist. Beispielsweise kann bei einer rechteckigen bzw. pulsförmigen Einhüllenden die Breite des Pulses derart gewählt werden, dass dies der Fall ist. Weist das Frequenzspektrum des Testanregungssignals für eine Frequenz ein Minimum auf, so ist diese Frequenz auch im Ausgangssignal unterdrückt. Hierdurch kann erreicht werden, dass eine Verfälschung der erfassten Frequenz bzw. der zu ermittelnden Resonanzfrequenz durch Beiträge weiterer, unerwünschter Resonanzen bzw. dominanter Frequenzen vermieden werden kann.

Für Ultraschallwandler kann die Resonanzfrequenz beispielsweise im Bereich von 1 MHz, beispielsweise bei 1,05 MHz liegen. Die angegebenen Abstände können somit beispielsweise wenigstens 10 KHz, wenigstens 30 KHz oder 50 KHz oder mehr sein. Die Resonanzfrequenz kann vorzugsweise jene Frequenz sein, die im erfindungsgemäßen Verfahren als ermittelte Frequenz ermittelt werden soll. Die Amplitude des Ausgangssignals kann bei gegebener Amplitude des Testanregungssignals bei der Resonanzfrequenz insbesondere ein globales Maximum aufweisen. Es ist jedoch auch möglich, dass der Messpfad bzw. der oder der weitere Schwingungswandler mehrere Resonanzfrequenzen aufweisen, wobei beispielsweise die Anregung auf einer Resonanzfrequenz erfolgen soll, bei der kein globales Maximum vorliegt.

Ein ausreichender Abstand der Minima des Leistungsdichtespektrums des Testanregungssignals von der Resonanzfrequenz kann beispielsweise dadurch erreicht werden, dass ein Hauptmaximum des Leistungsdichtespektrums des Testanregungssignals relativ breit ist und beispielsweise eine Breite von wenigstens 10 % oder wenigstens 20 % oder wenigstens 30 % der Resonanzfrequenz aufweist.

Es können maximal 25 oder maximal 15 oder maximal 10 Perioden des periodischen Signals innerhalb der Einhüllenden liegen. Beispielsweise können 6 oder 12 Perioden des periodischen Signals innerhalb der Einhüllenden liegen. Durch Nutzung einer relativ kurzen Einhüllenden wird eine große Breite des Hauptmaximums des Leistungsdichtspektrums des Testanregungssignals erreicht. Insbesondere kann die Amplitude des Testanregungssignals außerhalb der genannten Länge der Einhüllenden Null sein. Als Einhüllende kann eine Rechteckfunktion genutzt werden, so dass beispielsweise die genannte Zahl von Perioden des periodischen Signals ohne weitere Amplitudenmodulation ausgegeben wird, vor und nach dieser Anzahl der Perioden jedoch kein Signal ausgegeben wird. Das periodische Signal kann beispielsweise ein Sinussignal sein.

Eine Messanregungsfrequenz des Messanregungssignals kann in Abhängigkeit der ermittelten Frequenz aus einer Lookup-Tabelle ausgelesen werden. Durch Vorgabe einer entsprechenden Lookup-Tabelle können einerseits systematische Fehler der Ermittlung der Frequenz, beispielsweise einer Resonanzfrequenz, eliminiert werden. Zugleich kann durch Nutzung einer entsprechenden Lookup-Tabelle gezielt erreicht werden, dass eine Anregung in einer definierten Lage zu einer Resonanzfrequenz erfolgt, falls dies gewünscht ist. Alternativ könnte die ermittelte Frequenz unmittelbar als Messanregungsfrequenz genutzt werden und/oder die ermittelte Frequenz könnte skaliert und/oder es könnte ein Offset addiert werden, um die Messanregungsfrequenz zu ermitteln.

Neben dem erfindungsgemäßen Verfahren betrifft die Erfindung eine Messeinrichtung gemäß Anspruch 9, mit einem Messbehälter zur Aufnahme des Fluids, einem an dem Messbehälter angeordneten Schwingungswandler und einer Steuereinrichtung, wobei die Messeinrichtung zur Durchführung des erfindungsgemäßen Verfahrens eingerichtet ist. Insbesondere kann der Schwingungswandler derart eingerichtet und an dem Messbehälter angeordnet sein, dass bei einer Ansteuerung mit einem Testanregungssignal der Steuereinrichtung eine Welle in dem Fluid angeregt wird, die sich entlang eines Ausbreitungspfades zurück zu dem Schwingungswandler oder zu wenigstens einem an dem Messbehälter angeordneten weiteren Schwingungswandler der Messeinrichtung geführt wird, wodurch der oder der weitere Schwingungswandler zu einer Schwingung angeregt wird. Die Steuereinrichtung ist dazu eingerichtet, den Schwingungswandler gemäß dem erfindungsgemäßen Verfahren anzusteuern und das Ausgangssignal des oder des weiteren Schwingungswandlers zu erfassen und gemäß dem erfindungsgemäßen Verfahren zu verarbeiten.

Die Messeinrichtung kann mit den zum erfindungsgemäßen Verfahren erläuterten Merkmalen mit den dort genannten Vorteilen weiter gebildet werden und umgekehrt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Messeinrichtung,
- Fig. 2: ein Ablaufdiagramm eines Ausführungsbeispiels des erfindungsgemäßen Verfahrens,
- Fig. 3: Leistungsdichtespektra verschiedene Testanregungssignale, die in einem Ausführungsbeispiel des erfindungsgemäßen Verfahrens nutzbar sind, und
- Fig. 4 - 7: Mess- und Verarbeitungsdaten, die im Rahmen von Ausführungsbeispielen des erfindungsgemäßen Verfahrens erfasst wurden.

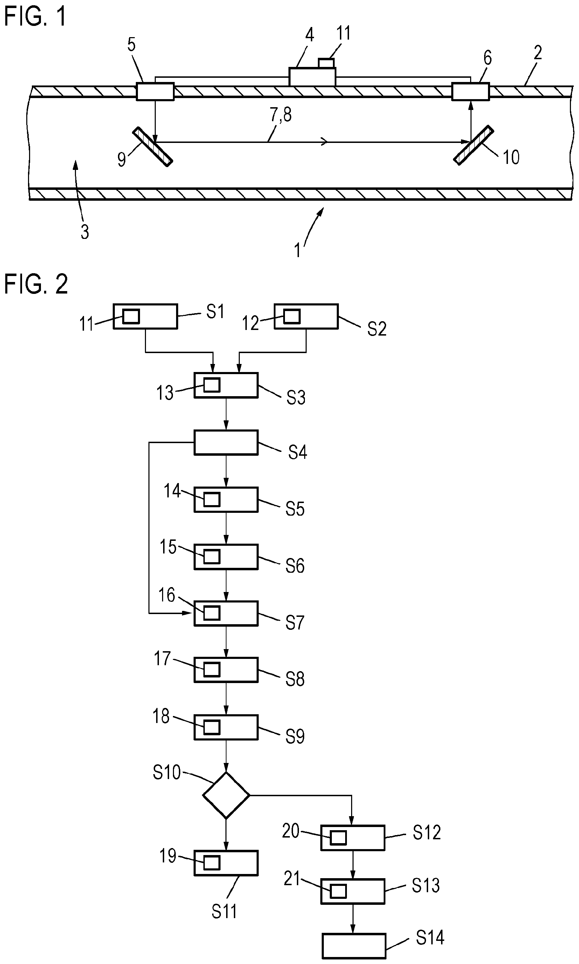

Fig. 1 zeigt eine Messeinrichtung 1, die zur Ermittlung einer Fluidgröße, insbesondere eines Durchflusses eines Fluids durch den das Fluid führenden Messbehälters 3, dient. An der Seitenwand 2 des Messbehälters 3 sind ein Schwingungswandler 5 und ein weiterer Schwingungswandler 6 angeordnet. Den Schwingungswandlern 5, 6 kann durch eine Steuereinrichtung 4 ein jeweiliges Anregungssignal zugeführt werden, um sie zu Schwingungen anzuregen und hierdurch jeweils eine Welle 7 anzuregen, wie in Fig. 1 für den Schwingungswandler 5 dargestellt ist. Die durch den Schwingungswandler 5 angeregte Welle 7 wird entlang eines Ausbreitungspfades 8 zu dem weiteren Schwingungswandler 6 geführt und umgekehrt. Der jeweilige Schwingungswandler 5, 6, an dem die Welle 7 einläuft, wird zu Schwingungen angeregt. Hierdurch wird durch den jeweiligen Schwingungswandler 5, 6 ein Ausgangssignal bereitgestellt, das die Schwingung betrifft und das durch die Steuereinrichtung 4 erfasst wird. Die Führung der Welle 7 entlang dem Ausbreitungspfad 8 wird durch Ultraschallspiegel 9, 10 erreicht. Alternativ wäre es beispielsweise auch möglich, Schwingungswandler 5, 6 zu nutzen, die die Welle 7 diagonal in den Messbehälter 3 einstrahlen, womit unter Umständen auf die Ultraschallspiegel 9, 10 verzichtet werden kann. In einer anderen Ausführungsform wäre es auch möglich, dass die Schwingungswandler 5, 6 eine entsprechende Welle nicht direkt im Fluid anregen, sondern zunächst die Seitenwand 2 zu Schwingungen anregen, die wiederum die Welle 7 anregen.

Die gezeigte Messeinrichtung 1 kann beispielsweise dazu genutzt werden, eine Flussgeschwindigkeit und somit einen Durchfluss des Fluids 3 zu bestimmen, indem ein Laufzeitunterschied der Welle 7 für eine Ausbreitung von dem Schwingungswandler 5 zu dem weiteren Schwingungswandler 6 und umgekehrt ausgewertet wird. Das im Weiteren beschriebene Vorgehen kann auch bei Messeinrichtungen genutzt werden, die andere Fluideigenschaften ermitteln sollen, beispielsweise eine Fluidart durch Messung der Schallgeschwindigkeit. Hierbei ist es beispielsweise auch möglich, dass die Welle 7 ausgehend vom Schwingungswandler 5 entlang einem nicht gezeigten Ausbreitungspfad zu diesem zurückgeführt wird, so dass kein weiterer Schwingungswandler 6 erforderlich ist. Dies wäre in dem in Fig. 1 gezeigten Beispiel beispielsweise dadurch möglich, dass auf den Ultraschallspiegel 9 verzichtet wird, womit die Welle 7 von der gegenüberliegenden Seitenwand 2 zurück zu dem Schwingungswandler 5 reflektiert wird.

Um eine hohe Messqualität bei geringem Energieverbrauch zu erreichen, ist es vorteilhaft, wenn ein im Rahmen der Ermittlung der Fluidgröße zur Ansteuerung der Schwingungswandler 5, 6 genutztes Messanregungssignal eine dominante Frequenz aufweist, die einer Resonanzfrequenz des Systems bzw. der Schwingungswandler 5, 6 entspricht, was zu einer besonders großen Amplitude des Ausgangssignals bei gegebener Anregungsleistung führt. Da diese Frequenz typischerweise von den Betriebsparametern, beispielsweise der Temperatur, abhängig ist und sich zudem aufgrund von Bauteiltoleranzen zwischen verschiedenen Messeinrichtungen unterscheiden kann bzw. sich mit zunehmender Alterung der Messeinrichtung ändern kann, ist es vorteilhaft eine entsprechende Frequenz in bestimmten Betriebssituationen oder regelmäßig während des Betriebs der Messeinrichtung 1 zu ermitteln. Ein entsprechendes durch die Steuereinrichtung 4 implementiertes Verfahren wird im Folgenden mit Bezug auf Fig. 2 detailliert erläutert werden.

In Schritt S1 wird zunächst ein periodisches Signal 11, beispielsweise eine Sinusschwingung, mit einer bestimmten Frequenz generiert. Die Frequenz des periodischen Signals wird so gewählt, dass sie einen gewissen Abstand von einer vermuteten Resonanzfrequenz aufweist, jedoch nicht allzu weit von dieser beabstandet ist. Beispielsweise kann sich die Frequenz des periodischen Signals um zwischen 1 % und 10 % der vermuteten Resonanzfrequenz von dieser unterscheiden.

In Schritt S2 wird eine Einhüllende 12 generiert, die in Schritt S3 zur Amplitudenmodulation des periodischen Signals 11 genutzt wird, um ein Testanregungssignal 13 bereitzustellen. Im einfachsten Fall kann die Einhüllende 12 eine Rechteckfunktion sein, so dass das Testanregungssignal 13 beispielsweise einer vorgegebenen Anzahl von Perioden des periodischen Signals 11 entsprechen kann. Es sind jedoch auch andere Einhüllende 12, die auch als Fensterfunktionen bezeichnet werden können, möglich, beispielsweise eine Cosinusquadratfunktion, eine trapezförmige Einhüllende oder Ähnliches. Vorzugsweise wird eine relativ kurze Einhüllende 12 verwendet. Hierdurch resultierten ein breites Frequenzspektrum und somit eine robuste Anregung der Resonanzfrequenz, selbst wenn das periodische Signal gegenüber der Resonanzfrequenz deutlich verstimmt ist.

In Schritt S4 wird das Testanregungssignal 13 durch die Steuereinrichtung 4 an den Schwingungswandler 5 ausgegeben, um diesen zu Schwingungen anzuregen. Hierdurch wird die Welle 7 im Fluid angeregt und wie obig erläutert entlang dem Ausbreitungspfad 8 zum weiteren Schwingungswandler 6 geführt, wodurch Schwingungen des weiteren Schwingungswandlers 6 angeregt werden.

In Schritt S5 wird ein Ausgangssignal 14, das aufgrund dieser Schwingungen durch den weiteren Schwingungswandler 6 bereitgestellt wird, von der Steuereinrichtung 4 erfasst. Hierbei kann insbesondere in dem Schritt S6 eine Analog-Digital-Wandlung des Ausgangssignals 14 erfolgen, um digitale Messdaten 15 bereitzustellen. Optional könnte auf diesen Schritt jedoch auch verzichtet werden und die weiteren Schritte zur Signalverarbeitung könnten analog erfolgen.

In Schritt S7 wird ein Auswerteintervall 16 des Ausgangssignals 14 bzw. der digitalen Messdaten 15 ermittelt, für das eine Frequenz, insbesondere die obig erläuterte Resonanzfrequenz, ermittelt werden soll. Um zu vermeiden, dass die spektrale Zusammensetzung des Testanregungssignals 13 die Ermittlung der Frequenz verfälscht, wird das Auswerteintervall 16 so gewählt, dass es erst nach Abschluss der Anregung der Welle 7 in Schritt S4 beginnt. Dies kann beispielsweise durch Setzen einer entsprechenden Zeitmarke durch die Steuereinrichtung 4 leicht implementiert werden. Ergänzend oder alternativ kann zum gleichen Zweck das Auswerteintervall 16 so gewählt werden, dass erst mit oder nach Erreichen eines Maximums der Amplitude der Schwingung bzw. des Ausgangssignals 14 bzw. der digitalen Messdaten 15 beginnt. Beispielsweise kann eine maximale Amplitude durch Berechnung einer Einhüllenden ermittelt werden. Das Ende des Auswerteintervalls 16 wird vorzugsweise so gewählt, dass zu diesem Zeitpunkt die Amplitude bzw. die Einhüllende des Ausgangssignals 14 bzw. der digitalen Messdaten 15 unter einen vorgegebenen Grenzwert fällt. Hierdurch kann vermieden werden, dass Zeitintervalle berücksichtigt werden, in denen das Ausgangssignal primär durch Rauschen geprägt ist.

In Schritt S8 wird das Auswerteintervall 16 bzw. ein Teilintervall hiervon fouriertransformiert, insbesondere durch eine Fast-Fourier-Transformation, um ein Leistungsdichtespektrum des Ausgangssignals 14 im Auswerteintervall 16 zu erhalten. In Schritt S9 kann die Frequenz 18 dann insbesondere als globales oder lokales Maximum des Leistungsdichtespektrums 17 ermittelt werden.

Wie obig erläutert ist die ermittelte Frequenz 18 ein gutes Maß für die Resonanzfrequenz des Messsystems bzw. der Schwingungswandler 5, 6. Eine starke oder plötzliche Änderung der ermittelten Frequenz 18 kann auf eine starke Alterung oder Beschädigung der Schwingungswandler 5, 6 oder anderen Komponenten der Messeinrichtung 1 und somit beispielsweise auf einen Service- bzw. Wartungsbedarf der Messeinrichtung 1 hinweisen. Daher kann in Schritt S10 geprüft werden, ob eine Auslösebedingung erfüllt ist, die beispielsweise erfüllt sein kann, wenn die Frequenz 18 außerhalb eines vorgegebenen Sollbereichs liegt bzw. die Abweichung von einem Sollwert einen Grenzwert überschreitet. Alternativ oder ergänzend wäre es auch möglich, durch die Auslösebedingung einen zeitlichen Verlauf der Frequenz 18 für mehrere zeitlich beabstandete Ermittlungen auszuwerten. Beispielsweise können hierdurch Sprünge der Frequenz 18 oder Ähnliches erkannt werden, die beispielsweise auf einen Riss oder eine andere Beschädigung der Schwingungswandler 5, 6 hinweisen können.

Ist die Auslösebedingung im Schritt S10 erfüllt, so kann in Schritt S11 ein Hinweis 19 oder auch eine Fehlermeldung ausgegeben werden. Hierzu kann eine Hinweiseinrichtung 11 der Messeinrichtung genutzt werden, beispielsweise ein Display, ein Lautsprecher oder Ähnliches. Besonders bevorzugt erfolgt zusätzlich oder alternativ eine drahtlose Übertragung des Hinweises bzw. der Fehlermeldung an ein System, welches alle Zählerdaten eines Anlagenbetreibers bzw. Wasserversorgungsnetzes speichern, verwalten und visualisieren kann. Ein Beispiel für ein solches System ist das IZAR Portal der Firma Diehl Metering. Alternativ wäre es auch möglich, einen entsprechenden Hinweis beispielsweise drahtlos an eine mobile Kommunikationseinrichtung eines Benutzers zu übertragen.

Wird in Schritt S10 ermittelt, dass die Auslösebedingung nicht erfüllt ist, wird stattdessen die Messeinrichtung 1 zum weiteren Betrieb konfiguriert. Hierbei wäre es alternativ zum gezeigten Ausführungsbeispiel auch möglich, dass die im Folgenden beschriebenen Schritte S12 bis S14 auch dann zusätzlich durgeführt werden, wenn die Auslösebedingung in Schritt S10 erfüllt ist. Beispielsweise kann die Messeinrichtung 1 zunächst normal weiter betrieben werden, bis ein Service erfolgen kann.

In Schritt S12 wird in Abhängigkeit der ermittelten Frequenz 18 eine Messanregungsfrequenz 20 ermittelt. Hierzu kann beispielsweise eine Lookup-Tabelle genutzt werden, um systematische Fehler im Rahmen der Ermittlung der Frequenz 18 zu kompensieren und/oder gezielt einen Betrieb der Messeinrichtung mit einer von der Resonanzfrequenz unterschiedlichen Frequenz zu erreichen. In Schritt S13 wird anschließend ein Messanregungssignal 21 generiert, dessen dominante Frequenz der Messanregungsfrequenz 20 entspricht. Dies kann beispielsweise dadurch realisiert werden, dass das Messanregungssignal 21 ein periodisches Signal mit der Messanregungsfrequenz 20 ist, dass durch eine Einhüllende amplitudenmoduliert wird.

In Schritt S14 wird das Messanregungssignal 21 genutzt, um die Schwingungswandler 5 bzw. 6 anzusteuern, um die Fluidgröße zu ermitteln. Beispielsweise kann das Messanregungssignal 21 genutzt werden, um die jeweiligen Wellen 7 im Rahmen der obig erläuterten Bestimmung eines Laufzeitunterschieds zwischen den Schwingungswandlern 5, 6 zu ermitteln, um einen Durchfluss zu ermitteln. Abgesehen von der Nutzung des Messanregungssignals 21 mit der wie obig erläutert ermittelten Messanregungsfrequenz 20 kann das Vorgehen hierbei dem aus dem Stand der Technik bekannten Vorgehen zur Ermittlung eines Laufzeitunterschiedes entsprechen und soll daher nicht detailliert erläutert werden.

Alternativ oder ergänzend könnte das Wissen um eine veränderte Resonanzfrequenz auch genutzt werden, um, insbesondere empirisch bestimmte, Korrekturfaktoren zur Bestimmung der Fluidgröße im Rahmen der Messung zu ermitteln. Dies kann z.B. mittels einer Look-up-Tabelle realisiert werden.

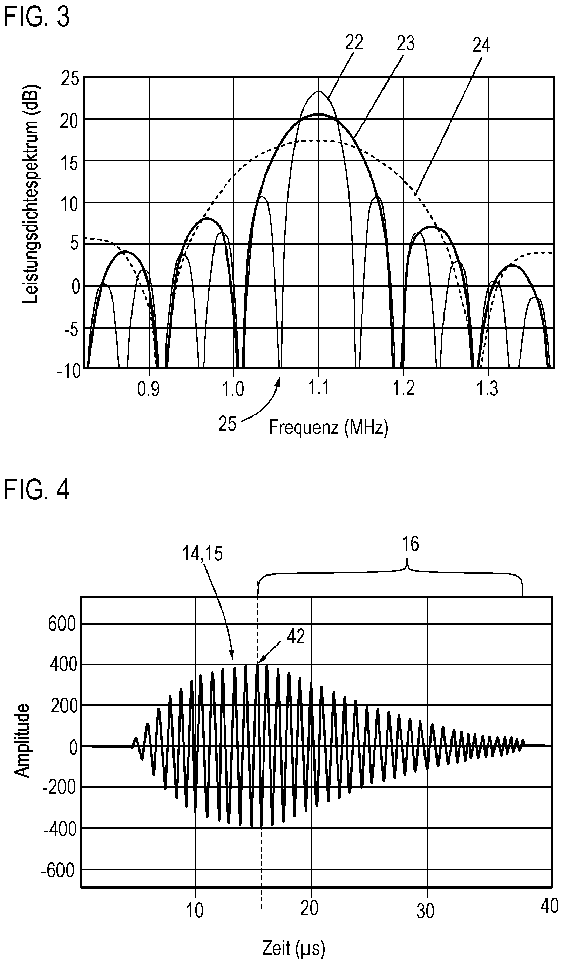

Im Folgenden werden die von der Steuereinrichtung 4 bereitgestellten bzw. verarbeiteten Ansteuerdaten und Signale an einigen Beispielen näher erläutert. Fig. 3 zeigt hierbei Leistungsdichtespektren 22, 23, 24 für drei verschiedene nutzbare Testanregungssignale 13. Das periodische Signal 11 der Testanregungssignale 13 ist hierbei in allen drei Fällen eine Sinuswelle mit einer Frequenz von 1,1 MHz. Als Einhüllende 12 wird jeweils eine Rechteckfunktion genutzt, deren Länge so gewählt ist, dass im Fall des Leistungsdichtespektrums 22 vierundzwanzig Schwingungsperioden, im Fall des Leistungsdichtespektrums 23 zwölf Schwingungsperioden und im Fall des Leistungsdichtespektrums 24 sechs Schwingungsperioden der Sinusschwingung ausgegeben werden. Die Ausgabe von weniger Schwingungsperioden führt zu einer Verbreiterung des Maximums des jeweiligen Leistungsdichtespektrums 22, 23, 24. Hierbei ist typischerweise die Nutzung von relativ wenigen Schwingungsperioden vorteilhaft. Werden, wie im Beispiel des Leistungsdichtespektrums 22, relativ viele Schwingungsperioden ausgegeben, können im Bereich der gesuchten Resonanzfrequenz relativ viele Minima 25 resultieren, die, wie später noch genauer erläutert werden wird, die Ermittlung der Resonanzfrequenz stören können.

Fig. 4 zeigt ein Beispiel für ein durch den weiteren Schwingungswandler 6 erfasstes Ausgangssignal 14 bzw. das Ausgangssignal 14 repräsentierende digitale Messdaten 15. Hierbei wurde ein Testanregungssignal 13 mit dem Leistungsdichtespektrum 23 verwendet, das heißt mit einer dominanten Frequenz von 1,1 MHz und 12 Schwingungsperioden. Solange die Schwingung des weiteren Schwingungswandlers 6 zwangsangeregt wird, steigt die Amplitude des Ausgangssignals 14 zunächst an. Da wie obig erläutert Eigen- bzw. Resonanzfrequenzen des Systems ermittelt werden sollen, wird ein Auswerteintervall 16 gewählt, das erst nach dem Maximum 42 der Amplitude des Ausgangssignals 14 beginnt.

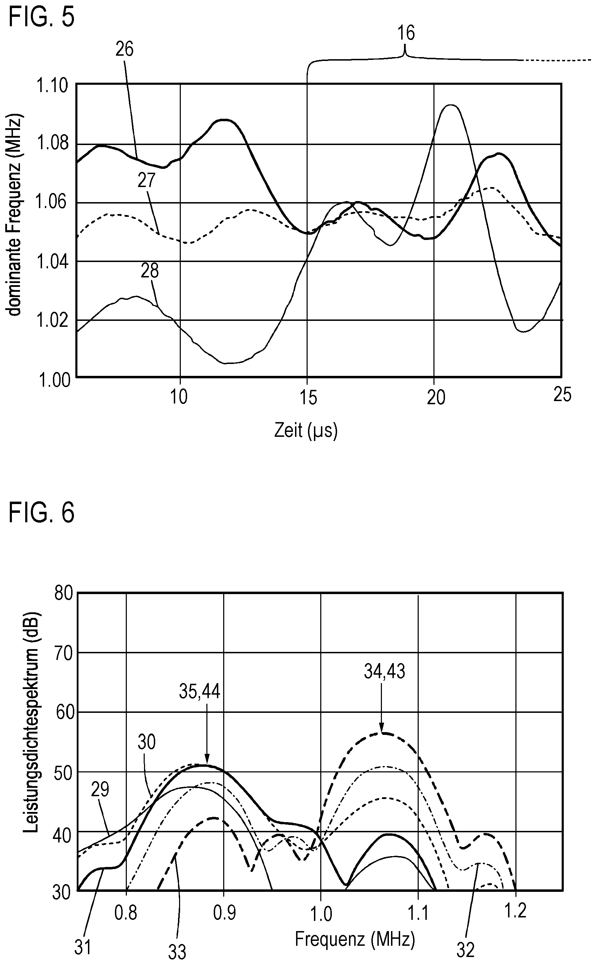

Die Auswirkungen der Wahl des Auswerteintervalls 16 werden im Folgenden mit Bezug auf Fig. 5 näher erläutert. Fig. 5 zeigt den zeitlichen Verlauf 26, 27, 28 der dominanten Frequenz des jeweiligen Ausgangssignals 14 für verschiedene dominante Frequenz eines jeweiligen Testanregungssignals 13. Der zeitliche Verlauf 26 entspricht hierbei einem Ausschnitt einer Kurzzeitfouriertransformierten des in Fig. 4 dargestellten Ausgangssignals 14, das aus einer dominanten Frequenz des Testanregungssignals 13 von 1,1 MHz resultiert. Beim zeitlichen Verlauf 27 war die dominante Frequenz des Testanregungssignals 13 1,05 MHz und beim zeitlichen Verlauf 28 1,0 MHz. Die Resonanzfrequenz liegt etwas oberhalb von 1,05 MHz. Die in Fig. 5 deutlich zu erkennende, relativ starke quasi periodische Oszillation der zeitlichen Verläufe 26, 27, 28 resultiert primär aus dem relativ kurzen genutzten Fenster für die jeweilige Kurzzeitfouriertransformation. Für längere genutzte Transformationsfenster resultiert eine deutlich geringere Variation der ermittelten dominanten Frequenz über die Zeit. Unabhängig davon kann in Fig. 5 jedoch eindeutig zwischen einem Zeitintervall vor Erreichen des Maximums 42 der Schwingungsamplitude und somit vor dem Auswerteintervall 16 und dem Verlauf innerhalb des Auswerteintervalls 16 unterschieden werden. Vor Beginn des Auswerteintervalls 16 wird als dominante Frequenz für die Verläufe 26, 28, bei denen die dominante Frequenz des Testanregungssignals 13 deutlich von der Resonanzfrequenz abweicht, jeweils eine Frequenz ermittelt, die zwischen der dominanten Frequenz des Testanregungssignals 13 und der Resonanzfrequenz liegt. Solange somit eine erzwungene Schwingung am Schwingungswandler 6 erfasst wird, ist eine robuste Ermittlung der Resonanzfrequenz kaum möglich. Im Bereich des Maximums 42 der Amplitude des Ausgangssignals 14, also zu Beginn bzw. kurz vor Beginn des Auswerteintervalls konvergieren die zeitlichen Verläufe 26, 27, 28 der dominanten Frequenz jedoch in Richtung der Resonanzfrequenz, so dass im Wesentlichen unabhängig von der dominanten Frequenz des Testanregungssignals 13 innerhalb des Auswerteintervalls 16 die gleiche dominante Frequenz, nämlich die Resonanzfrequenz, ermittelt wird.

Wird ausschließlich die dominante Frequenz betrachtet, ist hierbei darauf zu achten, dass die dominante Frequenz des Testanregungssignals 13 sich nicht zu stark an eine andere Resonanzfrequenz annähert. Ist dies der Fall, so resultiert zwar weiterhin für die Resonanzfrequenz 34 ein lokales Maximum 43 im Leistungsdichtespektrum, wie in Fig. 6 dargestellt ist, es kann jedoch sein, dass das globale Maximum 44 bei einer weiteren Resonanzfrequenz 35 liegt. Beispielhaft sind in Fig. 6 ein Leistungsdichtespektrum 29 eines Ausgangssignals 14, das bei einer Anregung mit einer dominanten Frequenz von 800 KHz resultiert, ein Leistungsdichtespektrum 30 eines Ausgangssignals 14, das bei einer Anregung mit einer dominanten Frequenz von 850 Khz resultiert, ein Leistungsdichtespektrum 31 eines Ausgangssignals 14, das bei einer Anregung mit einer dominanten Frequenz von 900 KHz resultiert. Ein Leistungsdichtespektrum 32 eines Ausgangssignals 14, das bei einer Anregung mit einer dominanten Frequenz von 950 KHz resultiert, und ein Leistungsdichtespektrum 33 eines Ausgangssignals 14, das bei einer Anregung mit einer dominanten Frequenz von 1,2 MHz resultiert, gezeigt. Ein globales Maximum 43 an der gesuchten Resonanzfrequenz 34 resultiert wie zu erkennen ist nur für die Leistungsdichtespektren 32 und 33. Die dominanten Frequenzen bei der Anregung für die Leistungsspektren 29, 30, 31 liegen deutlich näher an der weiteren Resonanzfrequenz 35, so dass ein Großteil der Energie der Anregung Schwingungen dieser Frequenz anregt. Wie jedoch ebenfalls in Fig. 6 zu erkennen ist, resultiert auch für diese Leistungsdichtespektren 29, 30, 31 zumindest ein lokales Maximum 43 an der Resonanzfrequenz 34, so dass auch bei Nutzung eines Testanregungssignals 13 mit relativ niedrigen Frequenzen die Resonanzfrequenz 34 aufgefunden werden kann, indem auch lokale Maxima 43, 44 berücksichtigt werden bzw. in dem nur Maxima 43, 44 in einem bestimmten Frequenzbereich, beispielsweise oberhalb von 1 MHz, berücksichtigt werden.

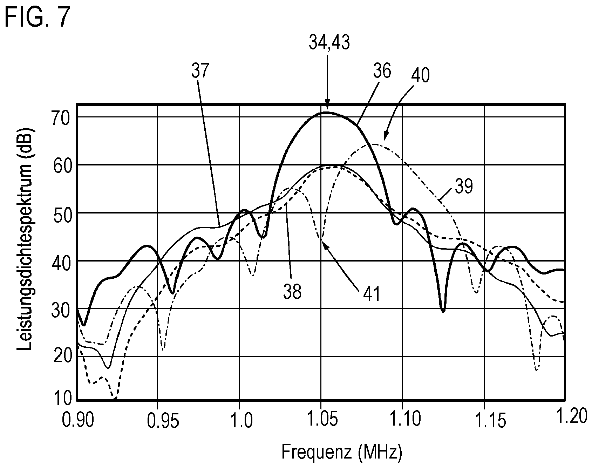

Durch das beschriebene Vorgehen, bei dem eine zu ermittelnde Frequenz für ein Auswerteintervall 16 ermittelt wird, in dem eine Zwangsanregung des weiteren Schwingungswandlers 6 bereits abgeschlossen ist, wird, wie erläutert, ein Einfluss des Spektrums des Testanregungssignals 13 auf die Ermittlung der Frequenz 18 weitgehend ausgeschlossen. Hierbei sollte jedoch vermieden werden, dass die zu ermittelnde Frequenz an einem Minimum des Leistungsdichtespektrums des Testanregungssignals 13 liegt. Dies wird im Folgenden detailliert mit Bezug auf Fig. 7 erläutert. Fig. 7 zeigt vier Leistungsdichtespektren 36, 37, 38, 39 von Ausgangssignalen 14, die für unterschiedliche Testanregungssignale 13 resultieren. Hierbei ist die dominante Frequenz bzw. die Frequenz des periodischen Signals 11 der Testanregungssignale 13 im Falle der ermittelten Leistungsdichtespektren 36 und 37 jeweils 1,05 MHz, das heißt sehr nahe an der Resonanzfrequenz. Die Leistungsdichtespektren 38, 39 wurden hingegen für eine Anregungsfrequenz des periodischen Signals 11 von 1,1 MHz ermittelt. Die Einhüllende ist im Falle der Leistungsspektren 36, 39 so gewählt, dass 24 Zyklen des periodischen Signals ausgegeben werden. Bei der Ermittlung der Leistungsdichtespektren 37 und 38 wurden jeweils nur 6 Zyklen des jeweiligen periodischen Signals 11 ausgegeben.

Während die Leistungsdichtespektren 36, 37, 38 alle, wie erwartet, ein Maximum 43 im Bereich der Resonanzfrequenz 34 zeigen, ist das Maximum 40 des Leistungsdichtespektrums 39 stark gegen die Resonanzfrequenz 34 verschoben und nahe der Resonanzfrequenz 34 ist ein lokales Minimum 41 des Leistungsdichtespektrums 39 zu erkennen. Dieses zunächst unerwartete Verhalten ist leicht zu erklären, wenn das in Fig. 3 gezeigte Leistungsdichtespektrum 22 des Testanregungssignals 13 berücksichtigt wird, dass zu Ermittlung des Leistungsdichtespektrums 39 bzw. des zugehörigen Ausgangssignals 14 genutzt wird. Dieses weist an der Position des Minimums 41 ebenfalls ein Minimum 25 auf, so dass aufgrund des Leistungsdichtespektrums 22 durch das Testanregungssignal 13 im Wesentlichen kein Energieeintrag bezüglich einer Schwingung mit der Resonanzfrequenz 34 erfolgen kann.

Um diese Problematik und somit potentiell eine Fehlerkennung der gesuchten Frequenz 18 zu vermeiden, ist es zweckmäßig, eine relativ breitbandige Anregung bzw. zumindest ein relativ breites erstes Maximum des Leistungsspektrums des Testanregungssignals 13 dadurch zu erreichen, dass eine kurze Einhüllende 12 verwendet wird, so dass beispielsweise nur 6 Zyklen oder sogar weniger Zyklen des periodischen Signals 11, beispielsweise einer Sinusschwingung, ausgegeben werden.

### Bezugszeichenliste

- 1: Messeinrichtung
- 2: Seitenwand
- 3: Messbehälter
- 4: Steuereinrichtung
- 5: Schwingungswandler
- 6: Schwingungswandler
- 7: Welle
- 8: Ausbreitungspfad
- 9: Ultraschallspiegel
- 10: Ultraschallspiegel
- 11: Signal
- 12: Einhüllende
- 13: Testanregungssignal
- 14: Ausgangssignal
- 15: Messdaten
- 16: Auswerteintervall
- 17: Leistungsdichtespektrum
- 18: Frequenz
- 19: Hinweis
- 20: Messanregungsfrequenz
- 21: Messanregungssignal
- 22: Leistungsdichtespektrum
- 23: Leistungsdichtespektrum
- 24: Leistungsdichtespektrum
- 25: Minima
- 26: Verlauf
- 27: Verlauf
- 28: Verlauf
- 29: Leistungsdichtespektrum
- 30: Leistungsdichtespektrum
- 31: Leistungsdichtespektrum
- 32: Leistungsdichtespektrum
- 33: Leistungsdichtespektrum
- 34: Resonanzfrequenz
- 35: Resonanzfrequenz
- 36: Leistungsdichtespektrum
- 37: Leistungsdichtespektrum
- 38: Leistungsdichtespektrum
- 39: Leistungsdichtespektrum
- 40: Maximum
- 41: Minimum
- 42: Maximum
- 43: Maximum
- 44: Maximum

- S1 - S14: Schritt

## Patentansprüche

1. Verfahren zum Betrieb einer Messeinrichtung (1), die zur Ermittlung einer ein Fluid und/oder eine Fluidströmung des Fluids betreffenden Fluidgröße dient und die einen das Fluid aufnehmenden und/oder von dem Fluid durchströmten Messbehälter (3) und einen an dem Messbehälter (3) angeordneten Schwingungswandler (5) umfasst, wobei durch eine Steuereinrichtung (4) der Messeinrichtung (1) der Schwingungswandler (5) zur Anregung einer Welle (7) in dem Fluid mit einem Testanregungssignal (13) angesteuert wird, wobei die Welle (7) entlang eines Ausbreitungspfades (8) zurück zu dem Schwingungswandler (5) oder zu wenigstens einem an dem Messbehälter (3) angeordneten weiteren Schwingungswandler (6) der Messeinrichtung (1) geführt wird, wodurch der oder der weitere Schwingungswandler (5, 6) zu einer Schwingung angeregt wird, wobei durch die Steuereinrichtung (4) ein diese Schwingung betreffendes Ausgangssignal (14) erfasst und eine Frequenz (18) jenes Abschnitts des Ausgangssignals (14) ermittelt wird, der in einem Auswerteintervall (16) liegt, wobei das Auswerteintervall (16) beginnt, nachdem die Ansteuerung des Schwingungswandlers (5) zur Anregung der Welle (7) abgeschlossen ist und/oder nachdem ein Maximum (42) der Amplitude der Schwingung erreicht oder überschritten ist, wobei die Ermittlung der Fluidgröße mit einem Messanregungssignal (21) in Abhängigkeit der ermittelten Frequenz (18) erfolgt, und/oder wobei bei Erfüllung einer Auslösebedingung, deren Erfüllung von der ermittelten Frequenz (18) abhängt, eine Fehlermeldung oder ein Hinweis (19) an einen Benutzer und/oder eine messeinrichtungsexterne Einrichtung ausgegeben wird und/oder die Messeinrichtung (1) in einen Fehlerzustand versetzt wird, in dem insbesondere keine Ermittlung der Fluidgröße erfolgt, wobei in allen Fällen eine Messeinrichtung (1) verwendet wird, bei der die Amplitude des Ausgangssignals (14) bei einer gegebenen Amplitude des Testanregungssignals (13) für wenigstens eine Resonanzfrequenz (34, 35) ein lokales Maximum (43, 44) aufweist, wobei das Testanregungssignal (13) ein durch eine Einhüllende (12) amplitudenmoduliertes periodisches Signal (11) ist, wobei sich einerseits die Resonanzfrequenz (34, 35) und die Anregungsfrequenz des periodischen Signals (11) um wenigstens 1 % oder wenigstens 3 % der Resonanzfrequenz (34, 35) unterscheiden und wobei andererseits die Anregungsfrequenz und die Einhüllende (12) so gewählt sind, dass die Minima (25) des Leistungsdichtespektrums (22, 23, 24) des Testanregungssignals (13) um wenigstens 1 % oder wenigstens 3 % der Resonanzfrequenz (34, 35) von dieser beabstandet sind.

2. Verfahren nach Anspruch 1, **dadurch gekennzeichnet, dass** die Ermittlung der Fluidgröße derart von der ermittelten Frequenz abhängt, dass das Messanregungssignal (21), das die Steuereinrichtung (4) im Rahmen der Ermittlung der Fluidgröße an den oder den weiteren Schwingungswandler (5, 6) ausgibt, in Abhängigkeit der ermittelten Frequenz (18) vorgegeben wird.

3. Verfahren nach Anspruch 1 oder 2, **dadurch gekennzeichnet, dass** die Steuereinrichtung (4) in Abhängigkeit des Ausgangssignals (14) digitale Messdaten (15) ermittelt, die den zeitlichen Verlauf des Ausgangssignals (14) beschreiben, wobei die Frequenz (18) und/oder der Zeitpunkt, zu dem das Maximum (42) der Amplitude der Schwingung erreicht wird, in Abhängigkeit der digitalen Messdaten (15) ermittelt werden.

4. Verfahren nach einem der vorangehenden Ansprüche, **dadurch gekennzeichnet, dass** die Frequenz (18) ermittelt wird, indem ein Maximum (43, 44) des Leistungsdichtespektrums (17, 29 - 32, 36 - 39) des Ausgangssignals (14) im Auswerteintervall (16) ermittelt wird oder indem Zeitabstände zwischen Überschreitungen und/oder Unterschreitungen eines vorgegebenen Grenzwertes durch das Ausgangssignal (14) innerhalb des Auswerteintervalls (16) ausgewertet werden.

5. Verfahren nach einem der vorangehenden Ansprüche, **dadurch gekennzeichnet, dass** durch die Steuereinrichtung (4) eine Einhüllende oder eine momentane Signalamplitude des Ausgangssignals (14) ermittelt wird, wobei der Beginn und/oder das Ende des Auswerteintervalls (16) von der Einhüllenden oder der momentanen Signalamplitude abhängen.

6. Verfahren nach einem der vorangehenden Ansprüche, **dadurch gekennzeichnet, dass** maximal 25 oder maximal 15 oder maximal 10 Perioden des periodischen Signals (11) innerhalb der Einhüllenden (12) liegen.

7. Verfahren nach einem der vorangehenden Ansprüche, **dadurch gekennzeichnet, dass** eine Messeinrichtung (1) verwendet wird, bei der die Amplitude des Ausgangssignals (14) für wenigstens eine weitere Resonanzfrequenz oder dominante Frequenz ein lokales Maximum aufweisen würde, wenn ein weißes Rauschen als Anregungssignal verwendet würde, wobei das Testanregungssignal (13) ein durch eine Einhüllende (12) amplitudenmoduliertes periodisches Signal (11) ist, wobei die Einhüllende (12) derart gewählt ist, dass das Frequenzspektrum des Testanregungssignals bei der weiteren Resonanzfrequenz oder der dominanten Frequenz ein lokales Minimum aufweist.

8. Verfahren nach einem der vorangehenden Ansprüche, **dadurch gekennzeichnet, dass** eine Messanregungsfrequenz (20) des Messanregungssignals (21) in Abhängigkeit der ermittelten Frequenz (18) aus einer Lookup-Tabelle ausgelesen wird.

9. Messeinrichtung zur Ermittlung einer ein Fluid und/oder eine Fluidströmung des Fluids betreffenden Fluidgröße, mit einem Messbehälter (3) zur Aufnahme des Fluids, einem an dem Messbehälter angeordneten Schwingungswandler (5, 6) und einer Steuereinrichtung (4), **dadurch gekennzeichnet, dass** die Messeinrichtung (1) zur Durchführung des Verfahrens nach einem der vorangehenden Ansprüche eingerichtet ist.

## Claims

1. Method for operating a measuring device (1) that is used to determine a fluid variable relating to a fluid and/or a fluid flow of the fluid and that comprises a measurement container (3), which receives the fluid and/or through which the fluid flows, and an oscillation transducer (5) arranged on the measurement container (3), wherein a control device (4) of the measuring device (1) actuates the oscillation transducer (5) to excite a wave (7) in the fluid using a test excitation signal (13), wherein the wave (7) is returned along a propagation path (8) to the oscillation transducer (5) or to at least one further oscillation transducer (6), arranged on the measurement container (3), of the measuring device (1), as a result of which the or the further oscillation transducer (5, 6) is excited to produce an oscillation, wherein the control device (4) detects an output signal (14) relating to this oscillation and determines a frequency (18) of that portion of the output signal (14) that is in an evaluation interval (16), the evaluation interval (16) beginning after the actuation of the oscillation transducer (5) to excite the wave (7) has concluded and/or after a maximum (42) of the amplitude of the oscillation has been reached or exceeded, wherein the fluid variable is determined using a measurement excitation signal (21) on the basis of the determined frequency (18), and/or wherein if a trigger condition is met, the meeting of said trigger condition being dependent on the determined frequency (18), an error message or advice (19) is output to a user and/or a device that is external to the measuring device and/or the measuring device (1) is put into an error state in which, in particular, the fluid variable is not determined, wherein a measuring device (1) for which the amplitude of the output signal (14) has a local maximum (43, 44) for at least one resonant frequency (34, 35) at a given amplitude of the test excitation signal (13) is used in all cases, wherein the test excitation signal (13) is a periodic signal (11) amplitude-modulated by an envelope (12), wherein firstly the resonant frequency (34, 35) and the excitation frequency of the periodic signal (11) differ by at least 1% or at least 3% of the resonant frequency (34, 35), and wherein secondly the excitation frequency and the envelope (12) are chosen such that the minima (25) of the power spectral density (22, 23, 24) of the test excitation signal (13) are spaced apart from the resonant frequency (34, 35) by at least 1% or at least 3% thereof.

2. Method according to Claim 1, **characterized in that** the determination of the fluid variable is dependent on the determined frequency in such a way that the measurement excitation signal (21) that the control device (4) outputs to the or the further oscillation transducer (5, 6) while determining the fluid variable is predefined on the basis of the determined frequency (18) .

3. Method according to Claim 1 or 2, **characterized in that** the control device (4) takes the output signal (14) as a basis for determining digital measurement data (15) that describe the time characteristic of the output signal (14), the frequency (18) and/or the time at which the maximum (42) of the amplitude of the oscillation is reached being determined on the basis of the digital measurement data (15).

4. Method according to one of the preceding claims, **characterized in that** the frequency (18) is determined by determining a maximum (43, 44) of the power spectral density (17, 29 - 32, 36 - 39) of the output signal (14) in the evaluation interval (16) or by evaluating intervals of time between instances of a predefined limit value being exceeded and/or or not reached by the output signal (14) within the evaluation interval (16).

5. Method according to one of the preceding claims, **characterized in that** the control device (4) determines an envelope or an instantaneous signal amplitude of the output signal (14), the beginning and/or end of the evaluation interval (16) being dependent on the envelope or the instantaneous signal amplitude.

6. Method according to one of the preceding claims, **characterized in that** no more than 25 or no more than 15 or no more than 10 periods of the periodic signal (11) are situated within the envelope (12).

7. Method according to one of the preceding claims, **characterized in that** a measuring device (1) is used for which the amplitude of the output signal (14) would have a local maximum for at least one further resonant frequency or dominant frequency if white noise were used as the excitation signal, the test excitation signal (13) being a periodic signal (11) amplitude-modulated by an envelope (12), the envelope (12) being chosen such that the frequency spectrum of the test excitation signal has a local minimum at the further resonant frequency or the dominant frequency.

8. Method according to one of the preceding claims, **characterized in that** a measurement excitation frequency (20) of the measurement excitation signal (21) is read from a lookup table on the basis of the determined frequency (18).

9. Measuring device for determining a fluid variable relating to a fluid and/or a fluid flow of the fluid, having a measurement container (3) for receiving the fluid, an oscillation transducer (5, 6) arranged on the measurement container and a control device (4), **characterized in that** the measuring device (1) is configured to perform the method according to one of the preceding claims.

## Revendications

1. Procédé permettant de faire fonctionner un dispositif de mesure (1) qui sert à déterminer une grandeur de fluide concernant un fluide et/ou un écoulement de fluide du fluide, et qui comprend un récipient de mesure (3) recevant le fluide et/ou traversé par le fluide et un transducteur de vibrations (5) disposé sur le récipient de mesure (3), dans lequel un dispositif de commande (4) du dispositif de mesure (1) pilote le transducteur de vibrations (5) pour exciter une onde (7) dans le fluide à l'aide d'un signal d'excitation d'essai (13), dans lequel l'onde (7) est ramenée le long d'un chemin de propagation (8) au transducteur de vibrations (5) ou à au moins un autre transducteur de vibrations (6), disposé sur le récipient de mesure (3), du dispositif de mesure (1) de sorte que le transducteur de vibrations (5) ou l'autre transducteur de vibrations (6) est excité en vibration, dans lequel le dispositif de commande (4) détecte un signal de sortie (14) concernant cette vibration et détermine une fréquence (18) de la partie du signal de sortie (14) qui se trouve dans un intervalle d'évaluation (16), dans lequel l'intervalle d'évaluation (16) commence après la fin du pilotage du transducteur de vibrations (5) pour exciter l'onde (7) et/ou après qu'un maximum (42) de l'amplitude de la vibration a été atteint ou dépassé, dans lequel la détermination de la grandeur de fluide est effectuée par un signal d'excitation de mesure (21) en fonction de la fréquence déterminée (18), et/ou dans lequel, si une condition de déclenchement est réalisée, dont la réalisation dépend de la fréquence déterminée (18), un message d'erreur ou une indication (19) est délivré(e) à un utilisateur et/ou à un dispositif externe au dispositif de mesure, et/ou le dispositif de mesure (1) est mis dans un état d'erreur dans lequel en particulier aucune détermination de la grandeur de fluide n'est effectuée, dans lequel dans tous les cas un dispositif de mesure (1) est utilisé dans lequel l'amplitude du signal de sortie (14) présente pour une amplitude donnée du signal d'excitation d'essai (13) un maximum local (43, 44) pour au moins une fréquence de résonance (34, 35), dans lequel le signal d'excitation d'essai (13) est un signal périodique (11) modulé en amplitude par une enveloppante (12), dans lequel d'une part, la fréquence de résonance (34, 35) et la fréquence d'excitation du signal périodique (11) se distinguent d'au moins 1 % ou d'au moins 3 % de la fréquence de résonance (34, 35), et dans lequel d'autre part, la fréquence d'excitation et l'enveloppante (12) sont choisies de telle sorte que les minima (25) du spectre de densité de puissance (22, 23, 24) du signal d'excitation d'essai (13) sont espacés de la fréquence de résonance (34, 35) d'au moins 1 % ou d'au moins 3 % de celle-ci.

2. Procédé selon la revendication 1, **caractérisé en ce que** la détermination de la grandeur de fluide dépend de la fréquence déterminée de telle sorte que le signal d'excitation de mesure (21) que le dispositif de commande (4) délivre dans le cadre de la détermination de la grandeur de fluide au transducteur de vibrations (5) ou à l'autre transducteur de vibrations (6) est prédéfini en fonction de la fréquence (18) déterminée.

3. Procédé selon la revendication 1 ou 2, **caractérisé en ce que** le dispositif de commande (4) détermine en fonction du signal de sortie (14) des données de mesure numériques (15) qui décrivent la courbe temporelle du signal de sortie (14), dans lequel la fréquence (18) et/ou l'instant auquel le maximum (42) de l'amplitude de la vibration est atteint sont déterminés en fonction des données de mesure numériques (15).

4. Procédé selon l'une quelconque des revendications précédentes, **caractérisé en ce que** la fréquence (18) est déterminée **en ce qu'**un maximum (43, 44) du spectre de densité de puissance (17, 29 à 32, 36 à 39) du signal de sortie (14) est déterminé dans l'intervalle d'évaluation (16), ou **en ce que** des intervalles de temps entre des dépassements et/ou des soupassements d'une valeur limite prédéfinie par le signal de sortie (14) à l'intérieur de l'intervalle d'évaluation (16) sont évalués.

5. Procédé selon l'une quelconque des revendications précédentes, **caractérisé en ce que** le dispositif de commande (4) détermine une enveloppante ou une amplitude de signal instantanée du signal de sortie (14), dans lequel le début et/ou la fin de l'intervalle d'évaluation (16) dépendent de l'enveloppante ou de l'amplitude de signal instantanée.

6. Procédé selon l'une quelconque des revendications précédentes, **caractérisé en ce qu'**un maximum de 25 ou un maximum de 15 ou un maximum de 10 périodes du signal périodique (11) se trouve à l'intérieur de l'enveloppante (12).

7. Procédé selon l'une quelconque des revendications précédentes, **caractérisé en ce qu'**un dispositif de mesure (1) est utilisé, dans lequel l'amplitude du signal de sortie (14) présenterait un maximum local pour au moins une autre fréquence de résonance ou fréquence dominante si un bruit blanc était utilisé comme signal d'excitation, dans lequel le signal d'excitation d'essai (13) est un signal périodique (11) modulé en amplitude par une enveloppante (12), dans lequel l'enveloppante (12) est choisie de telle sorte que le spectre de fréquence du signal d'excitation d'essai présente un minimum local pour l'autre fréquence de résonance ou la fréquence dominante.

8. Procédé selon l'une quelconque des revendications précédentes, **caractérisé en ce qu'**une fréquence d'excitation de mesure (20) du signal d'excitation de mesure (21) est lue dans une table de consultation en fonction de la fréquence déterminée (18).

9. Dispositif de mesure permettant de déterminer une grandeur de fluide concernant un fluide et/ou un écoulement de fluide du fluide, comprenant un récipient de mesure (3) pour recevoir le fluide, un transducteur de vibrations (5, 6) disposé sur le récipient de mesure, et un dispositif de commande (4), **caractérisé en ce que** le dispositif de mesure (1) est conçu pour exécuter le procédé selon l'une quelconque des revendications précédentes.
